(19) Europäisches Patentamt
European Patent Office
Office européen des brevets

(11) **EP 3 906 999 A1**

(12) **EUROPÄISCHE PATENTANMELDUNG**

(43) Veröffentlichungstag:
**10.11.2021  Patentblatt 2021/45**

(51) Int Cl.:
**B01J 23/44** *(2006.01)*          **B01D 53/94** *(2006.01)*
**B01J 35/10** *(2006.01)*

(21) Anmeldenummer: **20173091.8**

(22) Anmeldetag: **06.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **UMICORE AG & Co. KG**
**63457 Hanau-Wolfgang (DE)**

(72) Erfinder: **FRIEDRICH, Birgit**
**64853 Otzberg (DE)**

(54) **OXIDATIONSKATALYSATOR MIT PHOSPHORFAENGER**

(57)    Die vorliegende Erfindung betrifft einen Katalysator, der
• ein Trägersubstrat mit einem ersten Ende a und einem zweiten Ende b, sowie der Länge L,
• eine Materialzone A enthaltend ein Platingruppenmetall auf einem Trägermaterial mit einer Beladungsmenge von 40 bis 150g/l, bezogen auf das Volumen des Trägersubstrates und
• Materialzone B enthaltend ein Platingruppenmetall auf einem Trägermaterial mit einer Beladungsmenge von 75 bis 200 g/l, bezogen auf das Volumen des Trägersubstrates,
umfasst, wobei Materialzone B einen höheren Gehalt an Platingruppenmetall, bezogen auf das Volumen des Trägersubstrates und berechnet in g/l, aufweist als Materialzone A und wobei die Materialzone B einen Anteil an Poren mit einem Durchmesser von 0,5 bis 50 $\mu$m von 20 bis 30% aufweist.

Figur 1

**Beschreibung**

Die vorliegende Erfindung betrifft einen Oxidationskatalysator zur Reinigung der Abgase von Dieselmotoren, der einen Phosphorfänger umfasst.

Das Rohabgas von Dieselmotoren enthält neben Kohlenmonoxid CO, Kohlenwasserstoffen HC und Stickoxiden $NO_x$ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht.

Oxidationskatalysatoren sind in der Literatur umfangreich beschrieben. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.

Es sind auch bereits zonierte Oxidationskatalysatoren beschrieben, die in Fließrichtung des Abgases Materialzonen unterschiedlicher Zusammensetzung aufweisen, mit denen das Abgas nacheinander in Kontakt tritt.

So beschreiben US2010/257843, US2011/099975 und WO2012/079598 A1 zonierte Oxidationskatalysatoren, die Platin und Palladium enthalten.

Das Abgas von Dieselmotoren umfasst neben den bereits genannten Komponenten häufig auch aus Öladditiven stammende Phosphorverbindungen. Diese lagern sich auf dem Dieseloxidationskatalysator ab und verschlechtern über die Laufzeit seine Oxidationsfähigkeit.

In der Literatur sind dieses Problem, sowie Möglichkeiten zu seiner Lösung bereits beschrieben.

So offenbart die JP 2015066516A einen Dreiwege-katalysator, der in seiner obersten Schicht ein Kompositoxid aus Magnesium und Cer als Phosphorfänger enthält.

Die JP2013146706A lehrt einen zweischichtigen Katalysator, wobei die untere Schicht Edelmetall und die obere Schicht kein oder weniger Edelmetall als die untere Schicht enthält und wobei die obere Schicht eine höhere Porosität als die untere aufweist.

Es besteht dennoch Bedarf an Oxidationskatalysatoren, die wirkungsvoll über ihre gesamte Laufzeit vor einer Phosphorvergiftung geschützt sind.

Die vorliegende Erfindung betrifft demnach einen Katalysator, der

- ein Trägersubstrat mit einem ersten Ende a und einem zweiten Ende b, sowie der Länge L,
- eine Materialzone A enthaltend ein Platingruppenmetall auf einem Trägermaterial mit einer Beladungsmenge von 40 bis 150g/l, bezogen auf das Volumen des Trägersubstrates und
- Materialzone B enthaltend ein Platingruppenmetall auf einem Trägermaterial mit einer Beladungsmenge von 75 bis 200 g/l, bezogen auf das Volumen des Trägersubstrates,

umfasst, wobei Materialzone B einen höheren Gehalt an Platingruppenmetall, bezogen auf das Volumen des Trägersubstrates und berechnet in g/l, aufweist als Materialzone A und wobei die Materialzone B einen Anteil an Poren mit einem Durchmesser von 0,5 bis 50 $\mu$m von 20 bis 30% aufweist.

Materialzone B enthält als Platingruppenmetall zum Beispiel nur Platin, nur Palladium oder Platin und Palladium. Platin und Palladium sind bevorzugt und zwar insbesondere in einem Gewichtsverhältnis von 20:1 bis 1:5, wobei ein Gewichtsverhältnis von 10:1 bis 1:3 bevorzugt ist.

In Materialzone B liegt das Platingruppenmetall insbesondere in Mengen von 0,53 bis 2,5 g/l, bevorzugt in Mengen von 0,60 bis 1,4 g/l, bezogen auf das Volumen des Trägersubstrates vor.

Materialzone B weist einen Anteil an Poren mit einem Durchmesser von 0,5 bis 50 $\mu$m von 20 bis 30% auf.

Als Porenanteil wird im Rahmen der vorliegenden Anmeldung das Porenvolumen bezogen auf das Gesamtvolumen verstanden. Somit bedeutet vorliegend zum Beispiel ein Porenanteil der Materialzone B von 20%, dass 20% des Gesamtvolumens der Materialzone B von Poren mit einem Durchmesser von 0,5 bis 50$\mu$m gebildet werden.

Der Porenanteil einer Materialzone bzw. eines Katalysatorbereiches kann mittels eines Verfahrens bestimmt werden, das die folgenden Schritte umfasst:

- Auswählen des zu untersuchenden Katalysatorbereiches,
- Erstellen eines Querschliffs des zu untersuchenden Katalysatorbereiches, bei dem die Poren mit einem organischen Harz gefüllt sind,
- Erstellen einer Aufnahme des Querschliffs mittels Rasterelektronenmikroskop (REM),

- Auswahl des zu untersuchenden Teilbereiches der REM-Aufnahme,
- Umwandlung des ausgewählten Teilbereiches der REM-Aufnahme in ein Binärbild mittels eines Bildanalyseprogramms und
- Durchführen einer Porositätsverteilungsberechnung anhand des Binärbildes mittels eines Bildanalyseprogramms und nachfolgende Bestimmung des Porenanteils.

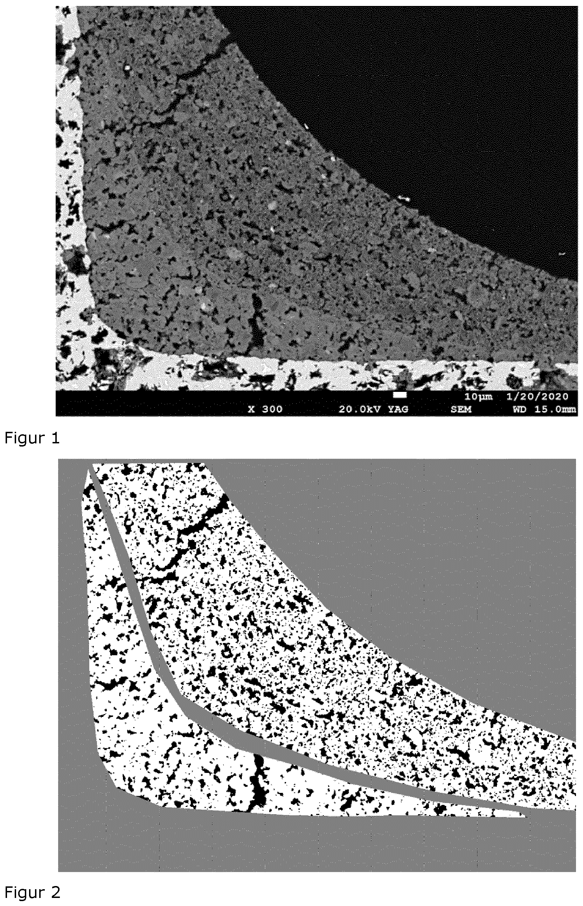

Zur Herstellung eines Querschliffes eines Katalysatorbereiches, bei dem die Poren mit einem organischen Harz gefüllt sind, stehen dem Fachmann bekannte Querschliffverfahren zur Verfügung.
Die Herstellung einer Aufnahme des Querschliffs mittels Rasterelektronenmikroskop (REM) erfolgt ebenfalls nach bekannten und umfassend beschriebenen Verfahren. Die spezifischen Messbedingungen sind dabei unkritisch, d.h. haben keinen Einfluss auf das Endergebnis. Dabei wird als Abbildungsverfahren die Detektion von zurückgestreuten Primärelektronen benutzt. Diese zurückgestreuten Primärelektronen sorgen für eine Signalintensität, die von der mittleren Ordnungszahl des untersuchten Materials abhängt. Schwerere Elemente erscheinen also hell, weil sie stark zurückstreuen, leichtere Elemente erscheinen hingegen dunkler. Somit erscheinen im erhaltenen REM-Bild die Poren dunkelgrau bis schwarz, während die Materialien des Washcoats heller erscheinen. Abbildung 1 zeigt ein derart erstelltes REM-Bild des Katalysators des nachfolgenden Beispiels 1, auf dem der Träger und die beiden Materialzonen A und B leicht voneinander zu unterscheiden sind.Im nächsten Schritt wird der zu untersuchende Teilbereich oder auch mehrere zu untersuchende Teilbereiche des REM-Bildes, also etwa ein Bereich einer Materialzone, ausgewählt und mittels eines Bildanalyse-programmes ein Binärbild erstellt. Figur 2 zeigt ein mittels des Bildanalyseprogramms Matlab Version 2019 erstelltes Binärbild, das aus der REM-Aufnahme der Figur 1 erstellt worden ist. Darin erscheinen die Poren schwarz und die Materialien des Washcoats weiß. Graue Bereiche sind nicht ausgewählte Bereiche, die nicht von Interesse sind. Neben Matlab stehen auch andere, dem Fachmann bekannte Bildanalyseprogramme zur Verfügung, so zum Beispiel das Programm ImageJ.
Im letzten Schritt wird anhand des Binärbildes eine Porositätsverteilungsberechnung durchgeführt, aus der der Porenanteil bestimmt werden kann.

Das Trägermaterial in Materialzone B kann Aluminiumoxid, dotiertes Aluminiumoxid, Siliziumoxid, Magnesiumoxid, Titanoxid oder eine Mischung oder ein Mischoxid oder ein Kompositoxid von mindestens zwei dieser Materialien sein. Insbesondere ist es aber Aluminiumoxid.

Materialzone A enthält als Platingruppenmetall zum Beispiel nur Platin, nur Palladium oder Platin und Palladium. Platin und Palladium sind bevorzugt und zwar insbesondere in einem Gewichtsverhältnis von 20:1 bis 1:5, wobei ein Gewichtsverhältnis von 15:1 bis 1:1 bevorzugt ist.
In Materialzone A liegt das Platingruppenmetall insbesondere in Mengen von 0,18 bis 1,4 g/l, bevorzugt in Mengen von 0,25 bis 0,7 g/l, bezogen auf das Volumen des Trägersubstrates vor.

Das Platingruppenmetall in Materialzone A liegt auf einem Trägermaterial vor. Als Trägermaterial kommen alle dem Fachmann für diesen Zweck geläufigen Materialien in Betracht. Es weist insbesondere eine BET-Oberfläche von 30 bis 250 m$^2$/g, bevorzugt von 100 bis 200 m$^2$/g auf (bestimmt nach DIN 66132) und ist bevorzugt ausgewählt aus der Gruppe bestehend aus Aluminiumoxid, dotiertes Aluminiumoxid, Siliziumoxid, Magnesiumoxid, Titanoxid und einer Mischung oder eines Mischoxids oder Kompositoxids von mindestens zwei dieser Materialien.
Bevorzugt sind Aluminiumoxid, Magnesium/Aluminium-Mischoxide und Aluminium/Silizium-Mischoxide.
Daneben kann auch Aluminiumoxid verwendet werden, das mit beispielsweise mit 1 bis 10 Gew.-%, insbesondere 3 bis 6 Gew.-%, Lanthanoxid dotiert ist.

Der Porenanteil der Materialzone A ist unkritisch. Bevorzugt weist Materialzone A einen Anteil an Poren mit einem Durchmesser von 0,5 bis 50 μm von 10 bis 30% auf.

Im erfindungsgemäßen Oxidationskatalysator ist die Beladung mit Materialzone B bevorzugt höher als die Beladung mit Materialzone A, jeweils in g/l und bezogen auf das Volumen des Trägersubstrates.

Bevorzugt beträgt die Beladung der Materialzone B 75 bis 150 g/l. Die Beladung der Materialzone A beträgt bevorzugt 50 bis 75 g/l.

Die Materialzonen A und B können auf dem Trägersubstrat in verschiedener Weise angeordnet sein.

In einer bevorzugten Ausführungsform ist Materialzone A über die gesamte Länge L des Trägersubstrates beschichtet, während Materialzone B sich ausgehend vom ersten Ende a des Trägersubstrates über 20 bis 80%, bevorzugt 30 bis 70%, der Länge L erstreckt und sich auf der Materialzone A befindet.

In einer weiteren bevorzugten Ausführungsform erstreckt sich Materialzone A ausgehend vom zweiten Ende des Trägersubstrates über 40 bis 60% der Länge L, während sich Materialzone B ausgehend vom ersten Ende des Trägersubstrates über 40 bis 60% der Länge L erstreckt, wobei

$$L = L_A + L_B$$

oder

$$L < L_A + L_B$$

oder

$$L > L_A + L_B$$

gilt, wobei $L_A$ die Länge der Materialzone A und $L_B$ die Länge der Materialzone B ist.

Der Fall $L > L_A + L_B$ bedeutet, dass ein Teil des Tragkörpers frei von Beschichtungen bleibt. Insbesondere bleibt in diesem Fall zwischen den Materialzonen A und B ein Spalt, der mindestens 0,5 cm lang ist, also beispielsweise 0,5 bis 1 cm.

Der erfindungsgemäße Katalysator umfasst einen Tragkörper. Dieser ist insbesondere ein Durchflusssubstrat, kann aber auch ein Wandflussfilter sein.

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an seinen beiden Enden offen sind.

Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

Erfindungsgemäße Katalysatoren können nach dem Fachmann geläufigen Methoden hergestellt werden, so etwa nach den üblichen Tauchbeschichtungsverfahren bzw. Pump- und Saug-Beschichtungsverfahren mittels eines Washcoats, d.h. einer wässrigen Suspension der Bestanteile, die die jeweilige Materialzone bilden. Gegebenenfalls schließt sich eine thermische Nachbehandlung (Kalzination) an.

Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschnichtung). In diesem Fall muss die mittlere Teilchengröße der der zu beschichtenden Materialien klein genug sein, um in die Poren des Wandflussfilters einzudringen.

In einer weiteren Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 $\mu$m und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit den Materialzonen A und B beschichtet werden, vorzugsweise werden sie aber zunächst mit einem inerten Material, zum Beispiel Titandioxid, und erst dann mit dem katalytischen Material beschichtet.

Der erfindungsgemäße Katalysator eignet sich in hervorragender Weise zur Oxidation von Kohlenmonoxid, Kohlenwasserstoffen, sowie Stickstoffmonoxid im Abgas von Dieselmotoren. Dabei ist er weit weniger für eine Vergiftung durch Phosphorverbindungen anfällig als bisher bekannte Katalysatoren.

Die vorliegende Erfindung betrifft auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über einen erfindungsgemäßen Katalysator geleitet wird, wobei das Abgas am ersten Ende a des Trägersubstrates in den Katalysator ein- und am zweiten Ende b wieder austritt.

Beispiel 1

a) Ein handelsübliches rundes Durchflusssubstrat aus Cordierit der Abmessungen 5,66"x4,00" mit der Zelligkeit 400 cpsi und der Wandstärke 4 mil wurde über seine gesamte Länge mit einem Washcoat beschichtet, der 0,353 g/l Platin und Palladium in einem Masseverhältnis von 12:1, geträgert auf einem handelsüblichen mit 5% Siliziumoxid dotiertem Aluminiumoxid, enthielt. Die Washcoatbeladung betrug 60 g/l. Der Porenanteil bestimmt nach dem oben beschriebenen Verfahren (siehe auch Figuren 1 und 2) betrug 15%.

b) Der in Schritt a) erhaltene Katalysator wurde in einem zweiten Schritt ausgehend von einem Ende auf 75% seiner Länge mit einem Washcoat beschichtet, der 0,79 g/l Platin und Palladium in einem Massenverhältnis von 1:1 geträgert auf einem hochporösen Aluminiumoxid enthielt. Die Washcoatbeladung betrug 110 g/l. Der Porenanteil (Poren mit einem Durchmesser von 0,5 bis 50 $\mu$m) der im zweiten Schritt aufgetragenen Schicht, bestimmt nach dem oben beschriebenen Verfahren (siehe auch Figuren 1 und 2) betrug 24%.
Der erhaltene Katalysator wird nachstehend als K1 bezeichnet.

Beispiel 2

a) Ein handelsübliches rundes Durchflusssubstrat aus Cordierit der Abmessungen 5,66"x4,00" mit der Zelligkeit 400 cpsi und der Wandstärke 4 mil wurde über 50% seiner Länge mit einem Washcoat beschichtet, der 0,353 g/l Platin und Palladium in einem Masseverhältnis von 12:1, geträgert auf einem handelsüblichen mit 5% Siliziumoxid dotiertem Aluminiumoxid. enthielt. Die Washcoatbeladung betrug 60 g/l. Der Porenanteil bestimmt nach dem oben beschriebenen Verfahren betrug 15%.

b) Der in Schritt a) erhaltene Katalysator wurde in einem zweiten Schritt ausgehend von dem unbeschichteten Ende über 50% seiner Länge mit einem Washcoat beschichtet, der 1,4 g/l Platin und Palladium in einem Massenverhältnis von 1:1 geträgert auf einem hochporösen Aluminiumoxid enthielt. Die Washcoatbeladung betrug 75 g/l. Der Porenanteil (Poren mit einem Durchmesser von 0,5 bis 50 $\mu$m) der im zweiten Schritt aufgetragenen Schicht bestimmt nach dem oben beschriebenen Verfahren betrug 24%.
Der erhaltene Katalysator wird nachstehend als K2 bezeichnet.

Vergleichsbeispiel 1

Beispiel 1 wurde wiederholt mit dem Unterschied, dass in Schritt b) die Washcoatbeladung nur 60g/l betrug. Der erhaltene Katalysator wird nachstehend als VK1 bezeichnet.

Vergleichsbeispiel 2

a) Ein handelsübliches rundes Durchflusssubstrat aus Cordierit der Abmessungen 5,66"x4,00" mit der Zelligkeit 400 cpsi und der Wandstärke 4 mil wurde über 50% seiner Länge mit einem Washcoat beschichtet, der 0,353 g/l Platin und Palladium in einem Masseverhältnis von 3:1, geträgert auf einem handelsüblichen mit 5% Siliziumoxid dotiertem Aluminiumoxid, enthielt. Die Washcoatbeladung betrug 100 g/l. Der Porenanteil (Poren mit einem Durchmesser von 0,5 bis 50 $\mu$m) bestimmt nach dem oben beschriebenen Verfahren betrug 15%.

b) Der in Schritt a) erhaltene Katalysator wurde in einem zweiten Schritt ausgehend von dem unbeschichteten Ende über 50% seiner Länge mit einem Washcoat beschichtet, der 1,4 g/l Platin und Palladium in einem Massenverhältnis von 3:1 geträgert auf einem hochporösen Aluminiumoxid enthielt. Die Washcoatbeladung betrug 100 g/l. Der Porenanteil (Poren mit einem Durchmesser von 0.5 bis 50 $\mu$m) der im zweiten Schritt aufgetragenen Schicht bestimmt nach dem oben beschriebenen Verfahren betrug 15%.
Der erhaltene Katalysator wird nachstehend als VK2 bezeichnet.

Vergleichstests

a) Die Katalysatoren K1, K2, VK1 und VK2 wurden für 50 Stunden bei 650°C bei der Luftfeuchtigkeit von 7% gealtert.

b) Die gealterten Katalysatoren wurden für 10, 20,30 und 40 Stunden an einem Motorprüfstand gealtert, indem dem Kraftstoff ein Phosphorenthaltendes Öladditiv zugegeben war. Die Zugabe an Öladditiv war auf eine Exposition von 0,6 g/l P pro Stunde berechnet.

c) Für die gemäß Schritt b) mit Phosphor behandelten Katalysatoren wurde der Zeitpunkt bestimmt, bei dem beaufschlagter Kohlenwasserstoff nicht mehr oxidiert wird, sondern durchschlägt (THC Slip). Dazu wurde bei allen Katalysatoren die gleiche Menge an Diesel dosiert um eine Exothermie zu generieren und dabei der HC-Slip gemessen. Ebenso wurde gemessen, ob die Zieltemperatur von 575°C erreicht wird.

d) Ergebnisse

| | HC Schlupf ohne P-Exposition [ppm] | HC Schlupf bei 6g/L P-Exposition [ppm] | HC Schlupf bei 12g/L P-Exposition [ppm] | HC Schlupf bei 18g/L P-Exposition [ppm] | HC Schlupf bei 24g/L P-Exposition [ppm] | Quenchtemperatur [°C] |
|---|---|---|---|---|---|---|
| K1 | 1500 | 2000 | 2800 | 3800 | 5000 | Zieltemperatur 575 erreicht |
| VK1 | 1400 | 2200 | 4500 | 7500; Quench | | 525 |
| K2 | 1000 | 2000 | 5000; Quench | | | 540 |
| VK2 | 1200 | 2400 | 8000; Quench | | 8000 | 490 |
| K1 erreicht als einziger Katalysator die Zieltemperatur von 575°C mit einer Exposition von 24g/L. VK1 mit einer geringeren Washcoat-Beladung in Materialzone B erreicht nur noch 525 °C im Test, bereits bei 18g/L. K2 ist im Vergleich zu VK2 resistenter gegen Phosphor und verlöscht erst bei 12g/L P bei 540°C mit einen HC-Durchbruch von 5000ppm, wohingegen VK2 bei dieser Exposition bei 490°C verlöscht mit 8000ppm HC Durchbruch. | | | | | | |

**Patentansprüche**

1.  Katalysator, der

    • ein Trägersubstrat mit einem ersten Ende a und einem zweiten Ende b, sowie der Länge L,
    • eine Materialzone A enthaltend ein Platingruppenmetall auf einem Trägermaterial mit einer Beladungsmenge von 40 bis 150g/l, bezogen auf das Volumen des Trägersubstrates und
    • Materialzone B enthaltend ein Platingruppenmetall auf einem Trägermaterial mit einer Beladungsmenge von 75 bis 200 g/l, bezogen auf das Volumen des Trägersubstrates,

    umfasst, wobei Materialzone B einen höheren Gehalt an Platingruppenmetall, bezogen auf das Volumen des Trägersubstrates und berechnet in g/l, aufweist als Materialzone A und wobei die Materialzone B einen Anteil an Poren mit einem Durchmesser von 0,5 bis 50 $\mu$m von 20 bis 30% aufweist.

2.  Katalysator gemäß Anspruch 1, **dadurch gekennzeichnet, dass** Materialzone A als Platingruppenmetall Platin und Palladium enthält.

3.  Katalysator gemäß Anspruch 2, **dadurch gekennzeichnet, dass** das Gewichtsverhältnis von Platin und Palladium in Materialzone A 20:1 bis 1:5 ist.

4.  Katalysator gemäß einem oder mehreren der Ansprüche 1 bis 3, **dadurch gekennzeichnet, dass** das Platingruppenmetall in Materialzone A in Mengen von 0,18 bis 0,53 g/l, bezogen auf das Volumen des Trägersubstrates, vorliegt.

5.  Katalysator gemäß einem oder mehreren der Ansprüche 1 bis 4, **dadurch gekennzeichnet, dass** Materialzone B als Platingruppenmetall Platin und Palladium enthält.

6.  Katalysator gemäß Anspruch 5, **dadurch gekennzeichnet, dass** das Gewichtsverhältnis von Platin und Palladium in Materialzone B 20:1 bis 1:5 ist.

**7.** Katalysator gemäß einem oder mehreren der Ansprüche 1 bis 6, **dadurch gekennzeichnet, dass** das Platingruppenmetall in Materialzone B in Mengen von 0,53 bis 1,06 g/l, bezogen auf das Volumen des Trägersubstrates, vorliegt.

**8.** Katalysator gemäß einem oder mehreren der Ansprüche 1 bis 7, **dadurch gekennzeichnet, dass** Materialzone A über die gesamte Länge L des Trägersubstrates beschichtet ist, während Materialzone B sich ausgehend vom ersten Ende a des Trägersubstrates über 40 bis 80% der Länge L erstreckt und sich auf der Materialzone A befindet.

**9.** Katalysator gemäß einem oder mehreren der Ansprüche 1 bis 8, **dadurch gekennzeichnet, dass** das Trägersubstrat ein Durchflusssubstrat ist.

**10.** Katalysator gemäß einem oder mehreren der Ansprüche 1 bis 9, **dadurch gekennzeichnet, dass** der Porenanteil nach einem Verfahren bestimmt wird, das die folgenden Schritte umfasst:

• Auswählen des zu untersuchenden Katalysatorbereiches,
• Erstellen eines Querschliffs des zu untersuchenden Katalysatorbereiches, bei dem die Poren mit einem organischen Harz gefüllt sind,
• Erstellen einer Aufnahme des Querschliffs mittels Rasterelektronenmikroskop (REM),
• Auswahl des zu untersuchenden Teilbereiches der REM-Aufnahme,
• Umwandlung des ausgewählten Teilbereiches der REM-Aufnahme in ein Binärbild mittels eines Bildanalyseprogramms und
• Durchführen einer Porositätsverteilungsberechnung anhand des Binärbildes mittels eines Bildanalyseprogramms und nachfolgende Bestimmung des Porenanteils.

**11.** Verfahren zur Reinigung von Abgasen von Kraftfahrzeugen, die mit mager betriebenen Motoren betrieben werden, **dadurch gekennzeichnet, dass** das Abgas über einen Katalysator gemäß einem oder mehreren der Ansprüche 1 bis 10 geleitet wird, wobei das Abgas am ersten Ende a des Trägersubstrates in den Katalysator ein- und am zweiten Ende b wieder austritt.

Figur 1

Figur 2

Europäisches
Patentamt

European
Patent Office

Office européen
des brevets

# EUROPÄISCHER RECHERCHENBERICHT

Nummer der Anmeldung

EP 20 17 3091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2017/093720 A1 (JOHNSON MATTHEY PLC [GB]) 8. Juni 2017 (2017-06-08) * Ansprüche; Beispiele * ----- | 1-11 | INV. B01J23/44 B01D53/94 B01J35/10 |
| A,D | EP 2 651 540 A1 (UMICORE AG & CO KG [DE]) 23. Oktober 2013 (2013-10-23) * Ansprüche; Beispiele * ----- | 1-11 | |
| A | WO 2020/058265 A1 (UMICORE AG & CO KG [DE]) 26. März 2020 (2020-03-26) * Ansprüche; Beispiele * ----- | 1-11 | |
| | | | **RECHERCHIERTE SACHGEBIETE (IPC)** B01J B01D |

Der vorliegende Recherchenbericht wurde für alle Patentansprüche erstellt

| Recherchenort | Abschlußdatum der Recherche | Prüfer |
|---|---|---|
| Den Haag | 14. September 2020 | Schoofs, Bart |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 17 3091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2020

| Im Recherchenbericht angeführtes Patentdokument | Datum der Veröffentlichung | Mitglied(er) der Patentfamilie | Datum der Veröffentlichung |
|---|---|---|---|
| WO 2017093720 A1 | 08-06-2017 | BR 112018010798 A2 | 21-11-2018 |
| | | CN 108472588 A | 31-08-2018 |
| | | DE 102016123120 A1 | 01-06-2017 |
| | | GB 2546158 A | 12-07-2017 |
| | | RU 2018123751 A | 09-01-2020 |
| | | US 2017151532 A1 | 01-06-2017 |
| | | WO 2017093720 A1 | 08-06-2017 |
| EP 2651540 A1 | 23-10-2013 | BR 112013014956 A2 | 13-09-2016 |
| | | CN 103269773 A | 28-08-2013 |
| | | EP 2651540 A1 | 23-10-2013 |
| | | JP 5959530 B2 | 02-08-2016 |
| | | JP 2014500145 A | 09-01-2014 |
| | | KR 20130129241 A | 27-11-2013 |
| | | KR 20170110168 A | 10-10-2017 |
| | | KR 20200003275 A | 08-01-2020 |
| | | RU 2013132350 A | 20-01-2015 |
| | | WO 2012079598 A1 | 21-06-2012 |
| WO 2020058265 A1 | 26-03-2020 | EP 3623047 A1 | 18-03-2020 |
| | | WO 2020058265 A1 | 26-03-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010257843 A
- US 2011099975 A
- WO 2012079598 A1
- JP 2015066516 A
- JP 2013146706 A